# EUROPEAN PATENT APPLICATION

(11) **EP 4 202 884 A1**
(43) Date of publication of application: **28.06.2023**
(21) Application number: 22215013.8
(22) Date of filing: 20.12.2022
(51) Int. Cl.: G08G 1/01, G08G 1/0969, G08G 1/16, G01C 21/34, G08G 1/0968

(54) **METHOD, APPARATUS, AND SYSTEM FOR DETERMINING A BICYCLE LANE DISRUPTION INDEX BASED ON VEHICLE SENSOR DATA**

(30) Priority: 22.12.2021 US 202117559573
(71) Applicant: HERE Global B.V., 5611 ZT Eindhoven (NL)
(72) Inventor: Beaurepaire, Jérôme, 92400 Courbevoie (FR)
(74) Representative: Cohausz & Florack

(57) **Abstract**

An approach is provided for determining a bicycle lane disruption index based on vehicle sensor data. The approach, for example, involves retrieving sensor data collected from one or more devices within proximity of a bicycle lane. The sensor data is geotagged with location data. The approach also involves processing the geotagged sensor data to identify an observed obstruction to bicycle traffic on the bicycle lane. The approach further involves map-matching the location data to a bicycle lane segment of a geographic database. The approach further involves computing the bicycle lane disruption index for the bicycle lane segment based on the obstruction. The bicycle lane disruption index indicates a probability of encountering any obstruction on the bicycle lane segment. The approach further involves storing the bicycle lane disruption index as an attribute of the bicycle lane segment in the geographic database.

## Description

### BACKGROUND

Providing environmental awareness for bicycling safety is one area of development for mapping and navigation services. Although bicycle lanes are becoming more increasingly common to separate bicyclists from general street traffic, bicyclists can still be vulnerable to various obstacles, obstructions, or other disruptions (e.g., illegally parked cars, debris, car door opening, construction, etc.) that may appear in bicycle lanes of a road. Accordingly, mapping and navigation service providers face significant technical challenges to enable bicyclists and/or other bicycle lane users to be aware of potential disruptions in their path.

### SOME EXAMPLE EMBODIMENTS

Therefore, there is a need for generating a map data that can indicate where and when bicyclists may expect to encounter potential disruptions.

According to one embodiment, a method comprises retrieving sensor data collected from one or more devices within proximity of a bicycle lane. The sensor data is geotagged with location data. The method also comprises processing the geotagged sensor data to identify an observed obstruction to bicycle traffic on the bicycle lane. The method further comprises map-matching the location data to a bicycle lane segment of a geographic database. The method further comprises computing the bicycle lane disruption index for the bicycle lane segment based on the obstruction. The bicycle lane disruption index, for instance, indicates a probability of encountering any obstruction on the bicycle lane segment. The method further comprises storing the bicycle lane disruption index as an attribute of the bicycle lane segment in the geographic database.

According to another embodiment, an apparatus comprises at least one processor, and at least one memory including computer program code for one or more computer programs, the at least one memory and the computer program code configured to, with the at least one processor, cause, at least in part, the apparatus to retrieve sensor data collected from one or more devices within proximity of a bicycle lane. The sensor data is geotagged with location data. The apparatus is also caused to process the geotagged sensor data to identify an observed obstruction to bicycle traffic on the bicycle lane. The apparatus is further caused to map-match the location data to a bicycle lane segment of a geographic database. The apparatus is further caused to compute the bicycle lane disruption index for the bicycle lane segment based on the obstruction. The bicycle lane disruption index, for instance, indicates a probability of encountering any obstruction on the bicycle lane segment. The apparatus is further caused to store the bicycle lane disruption index as an attribute of the bicycle lane segment in the geographic database.

According to another embodiment, a non-transitory computer-readable storage medium carries one or more sequences of one or more instructions which, when executed by one or more processors, cause, at least in part, an apparatus to retrieve sensor data collected from one or more devices within proximity of a bicycle lane. The sensor data is geotagged with location data. The apparatus is also caused to process the geotagged sensor data to identify an observed obstruction to bicycle traffic on the bicycle lane. The apparatus is further caused to map-match the location data to a bicycle lane segment of a geographic database. The apparatus is further caused to compute the bicycle lane disruption index for the bicycle lane segment based on the obstruction. The bicycle lane disruption index, for instance, indicates a probability of encountering any obstruction on the bicycle lane segment. The apparatus is further caused to store the bicycle lane disruption index as an attribute of the bicycle lane segment in the geographic database.

In addition, for various example embodiments described herein, the following is applicable: a computer program product may be provided. For example, a computer program product comprising instructions which, when the program is executed by a computer, cause the computer to perform any one or any combination of methods (or processes) disclosed.

According to another embodiment, an apparatus comprises means for retrieving sensor data collected from one or more devices within proximity of a bicycle lane. The sensor data is geotagged with location data. The method also comprises processing the geotagged sensor data to identify an observed obstruction to bicycle traffic on the bicycle lane. The method further comprises map-matching the location data to a bicycle lane segment of a geographic database. The method further comprises computing the bicycle lane disruption index for the bicycle lane segment based on the obstruction. The bicycle lane disruption index, for instance, indicates a probability of encountering any obstruction on the bicycle lane segment. The method further comprises storing the bicycle lane disruption index as an attribute of the bicycle lane segment in the geographic database.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing a method of the claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

### BRIEF DESCRIPTION OF THE DRAWINGS

The embodiments of the invention are illustrated by way of example, and not by way of limitation, in the figures of the accompanying drawings:
FIG. 1 is a diagram of a system capable of determining a bicycle lane disruption index based on vehicle sensor data, according to one embodiment;
FIG. 2 is a diagram illustration an example representation of bicycle lane disruption index over an extend of a bicycle lane, according to one embodiment;
FIG. 3 is a diagram of the components of mapping platform capable of determining a bicycle lane disruption index based on vehicle sensor data, according to one embodiment;
FIG. 4 is a flowchart of a process for determining a bicycle lane disruption index based on vehicle sensor data, according to one embodiment;
FIG. 5 is a diagram illustrating an example of collecting sensor data for determining a bicycle lane disruption index, according to one embodiment;
FIGs. 6A-6D are example sensor data depicting different bicycle lane obstruction types, according to one embodiment;
FIG. 7 is a diagram illustrating an example of machine-learning based image segmentation of sensor data for determining a bicycle lane disruption index, according to one embodiment;
FIG. 8 is a diagram illustrating an example of determining an observed obstruction from probe data, according to one embodiment;
FIG. 9 is a diagram of an example user interface for navigation routing based on a bicycle lane disruption index, according to one embodiment;
FIG. 10 is a diagram of an example user interface for alerting a bicycle lane disruptor, according to one embodiment;
FIG. 11 is a diagram of a geographic database, according to one embodiment;
FIG. 12 is a diagram of hardware that can be used to implement an embodiment;
FIG. 13 is a diagram of a chip set that can be used to implement an embodiment; and
FIG. 14 is a diagram of a mobile terminal (e.g., handset or vehicle or part thereof) that can be used to implement an embodiment.

### DESCRIPTION OF SOME EMBODIMENTS

Examples of a method, apparatus, and computer program for determining a bicycle lane disruption index based on vehicle sensor data are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

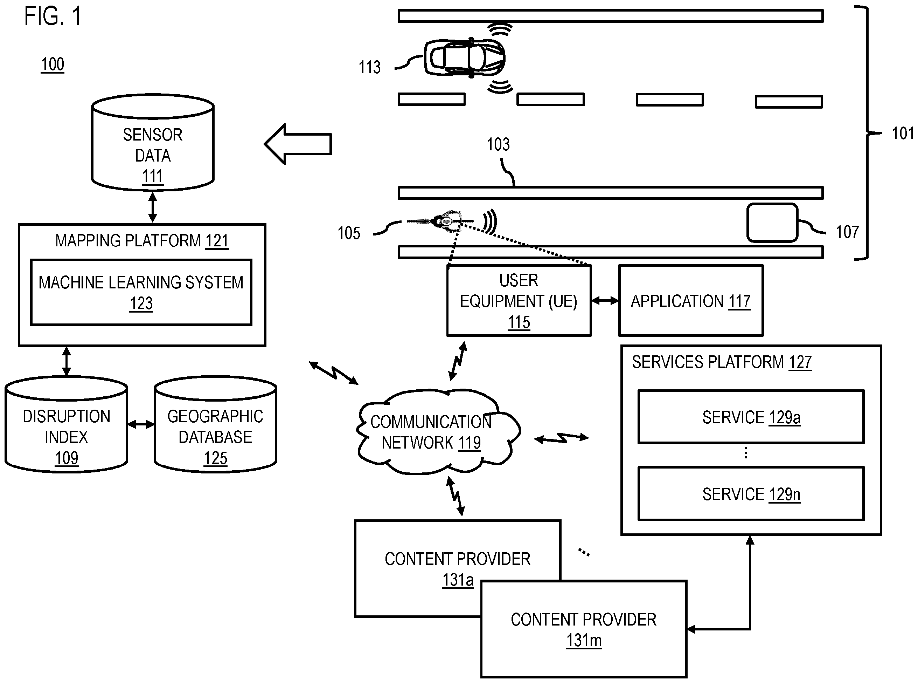

FIG. 1 is a diagram of a system capable of determining a bicycle lane disruption index based on vehicle sensor data, according to one embodiment. Many roads (e.g., road 101) support both vehicular traffic on vehicle travel lanes and bicycle traffic on separate bicycle lanes (e.g., bicycle lane 103). Although the creation of a separate bicycle lane 103 can increase safety for bicyclists (e.g., rider of bicycle 105) can result in the increased safety for bicyclists, bicyclist nonetheless face potential dangers from various possible obstructions 107 (e.g., other vehicles on the road 101, parked vehicles, vehicles opening doors, debris, objects, etc.) that can fully or partially block the bicycle 105's path in the bicycle lane 103. These possible obstructions 107, however, are generally transient and can be large in number. Accordingly, mapping individual obstructions 107 can be resource intensive to perform and maintain because the data can quickly become out of date (e.g., as the obstructions 107 emerge and disappear). Accordingly, mapping and navigation service providers face significant technical challenges to provide information on the presence of possible obstructions 107 in bicycle lanes 103 that does not quickly become out of date.

To address these technical challenges, the system 100 of FIG. 1 introduces a capability to generate a bicycle disruption index 109 based on sensor data 111 (e.g., real-time and/or historical sensor data reports) that depict various segments of the bicycle lanes. The sensor data 111 can be image data, probe data, and/or other equivalent types of data collected from one or more sensors of vehicles 113 and/or bicycles 105 (or user equipment (UE) devices 115 affixed to the vehicles 113 and/or bicycles 105 executing applications 117) traversing the road 101 that includes a bicycle lane 103. The collected sensor data 111 is then reported or otherwise transmitted (e.g., over a communication network 119) to a mapping platform 121 for processing. The sensor data 111 can be processed (e.g., using a machine learning based feature detector such as a machine learning system 123) to detect instances in which an obstruction 107 is observed in the bicycle lane 103.

In one embodiment, the bicycle lane disruption index 109 is calculated based on the instances of observed/detected obstructions 107 and is a metric that represents the probability that a bicyclist will encounter any obstruction in general (as opposed to a specific obstruction 107) on a given segment (e.g., each meter or other designated distance interval) of a bicycle lane 103. For example, a bicycle lane disruption index 109 can be computed for each meter or distance interval of a bicycle lane 103 (or any other designated portion of the bicycle lane 103) to map the bicycle lane disruption index 109 over the extent of the bicycle lane 103. In one embodiment, the bicycle lane disruption index 109 can also be calculated over designated time epochs (e.g., each 15-minute time epoch over an entire day). The bicycle lane disruption index 109 can then be calculated for each segment (e.g., 1-meter segment or other designated distance) for each time epoch. In this way, the probability of encountering any obstacle at each segment of a bicycle lane 103 can be determined. In one embodiment, this mapping of the bicycle lane disruption index 109 can then be stored in the digital map data of a geographic database 125.

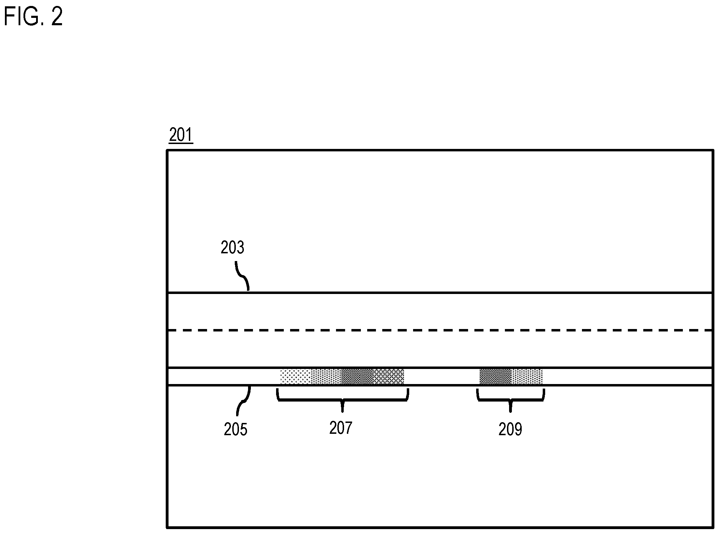

FIG. 2 is a diagram illustration an example representation 201 (e.g., a mapping user interface) of a bicycle lane disruption index 109 over an extent of a bicycle lane 103, according to one embodiment. In the example of FIG. 2, the mapping platform 121 has collected sensor data 111 (e.g., image data) over a designated time period that depicts the bicycle lane 203 of the road 205. The sensor data 111 is processed to determine instances of when an obstruction 107 is detected along discrete segments (e.g., 1-meter segments) of the bicycle lane 205. Then, a bicycle lane disruption index 109 is calculated based on the instances map-matched to a given segment to determine a probability of encountering any obstacle on that segment of the bicycle lane 205. The probability, for instance, can range from 0.0 (e.g., 0% probability of encountering an obstacle) to 1.0 (100% probability of encountering an obstacle) and be based on the frequency at which the instances of an obstruction 107 (e.g., as determined from the senor data 111) is observed at the given segment. As shown, the individual 1 -meter segments of the bicycle lane 103 are visualized based the value of their respective bicycle lane disruption indices 109. For example, index values below a minimum threshold are shown as white or blank, with higher values shaded darker. In this example, segments in portion 207 and portion 209 are associated with higher values. Then each 1-meter segment in these portions 207 and 209 are shaded darker in proportion to their index values.

In summary, the various embodiments described herein disclose a method, apparatus, and system to compute a bicycle lane disruption index 109 by leveraging sensor data 111 (e.g., light detection and ranging (LiDAR) sensors, vehicle's camera feeds, and/or equivalent). By using a bicycle lane disruption index 109, the system 100 enables bicycle riders to be routed on the safest bicycle lanes among other applications and/or services. For example, it is contemplated that the bicycle lane disruption index 109 can be use directly or as attributes of bicycle lanes 103 stored in the geographic database 125 by any service or application. Examples of the services and/or applications include but are not limited to a services platform 127, one or more services 129a-129n (also collectively referred to as services 129) of the services platform 127, one or more content providers 131a-131m (also collectively referred to as content providers 131), and/or the like.

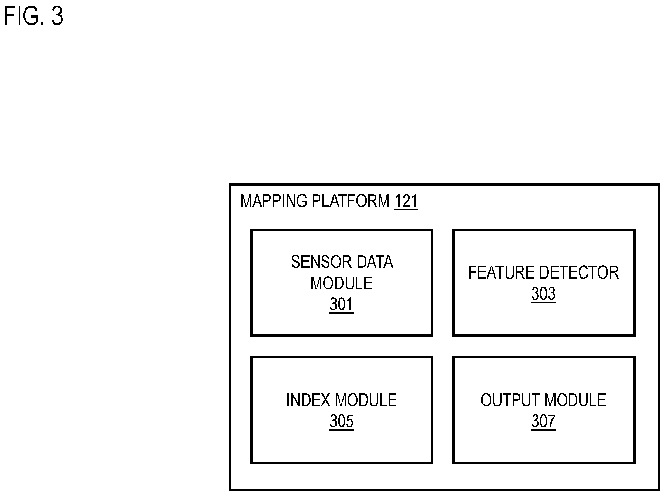

FIG. 3 is a diagram of the components of mapping platform 121 capable of determining a bicycle lane disruption index based on vehicle sensor data, according to one embodiment. In one embodiment, as shown in FIG. 2, the mapping platform 121 of the system 100 includes one or more components for determining a bicycle lane disruption index 109 according to the various embodiments described herein. It is contemplated that the functions of the components of the mapping platform 121 may be combined or performed by other components of equivalent functionality. As shown, in one embodiment, the mapping platform 121 includes a sensor data module 301, a feature detector 303, an index module 305, and an output module 307. The above presented modules and components of the mapping platform 121 can be implemented in hardware, firmware, software, or a combination thereof. Though depicted as a separate entity in FIG. 1, it is contemplated that the mapping platform 121 may be implemented as a module of any of the components of the system 100 (e.g., a component of the services platform 127, services 129, content providers 131, vehicles 135, UEs 115, applications 117, and/or the like). In another embodiment, one or more of the modules 301-309 may be implemented as a cloud-based service, local service, native application, or combination thereof. The functions of the mapping platform 121 and modules 301-309 are discussed with respect to figures below.

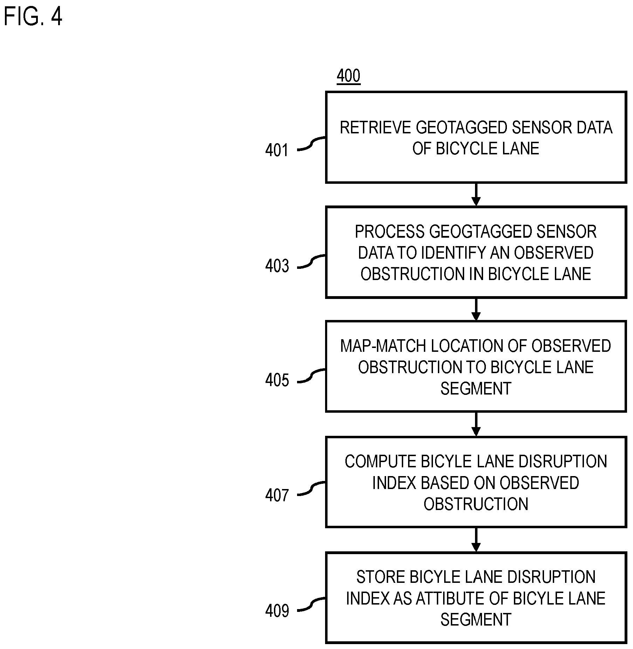

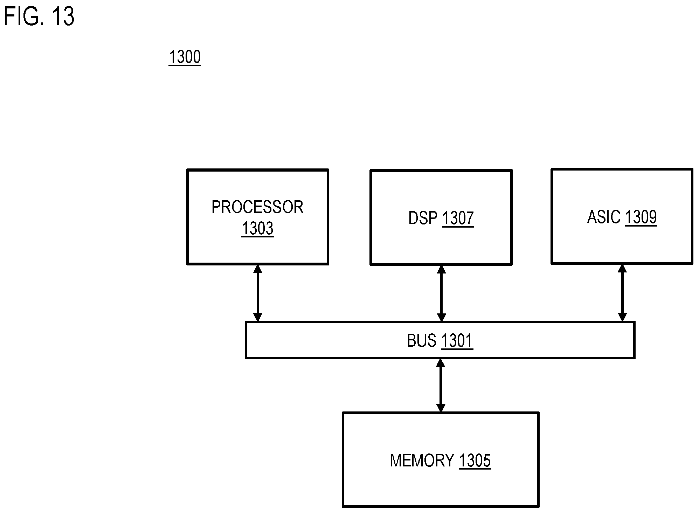

FIG. 4 is a flowchart of a process for determining a bicycle lane disruption index based on vehicle sensor data, according to one embodiment. In various embodiments, the mapping platform 121 and/or any of the modules 301-309 may perform one or more portions of the process 400 and may be implemented in, for instance, a chip set including a processor and a memory as shown in FIG. 13. As such, the mapping platform 121 and/or any of the modules 301-309 can provide means for accomplishing various parts of the process 400, as well as means for accomplishing embodiments of other processes described herein in conjunction with other components of the system 100. Although the process 400 is illustrated and described as a sequence of steps, it is contemplated that various embodiments of the process 400 may be performed in any order or combination and need not include all of the illustrated steps.

In step 401, the sensor data module 301 retrieves sensor data 111 collected from one or more devices within proximity of a bicycle lane. In one embodiment, the sensor data is geotagged with location data (e.g., geocoordinates) and/or a timestamp (e.g., date and time) indicating where and when the sensor data 111 was collected. By way of example, the sensor data 111 includes image data captured by a camera sensor, light detection and ranging (LiDAR) data captured by a LiDAR sensor, probe data determined using a location sensor, or combination thereof.

As described previously, the mapping platform 121 determines the likelihood to have any element obstructing the bicycle lane 103 by capturing such events with vehicle sensors (e.g., camera, LiDAR, location sensors, etc.). Those vehicles 113. bicycles 105, UEs 115, applications 117, and/or any other equivalent device reporting the sensor data 111 could either report: (1) any obstruction 107 that they would detect on bicycle lanes 103 (e.g., image/video or other sensor data 111 could be geotagged and reported to the cloud - e.g., the mapping platform 121); or (2) a specific segment of the bicycle lane 103 which would be obstructed (e.g., link 1234 at offset 4324 is reported to be blocked on Monday 22/09/2021 at 9:03am) based on analysis of the sensor data 111 processed locally on the client device (e.g., the vehicle 113, UE 115, application 117, and/or the like). In other words, the sensor data 111 can be sent to a cloud or server-side component for processing to identify an obstruction 107 on a bicycle lane 103, or the client or edge device (e.g., vehicle 113, UE 115, application 117, etc.) can process the sensor data 111 locally to identify the obstruction 107 and then report the detected obstruction 107 to the mapping platform 121 (e.g., as a sensor event). By processing the sensor data 111 locally and reporting only sensor events, the system 100 can reduce the bandwidth, memory, and processing resources needed to process the sensor data 111 in the cloud.

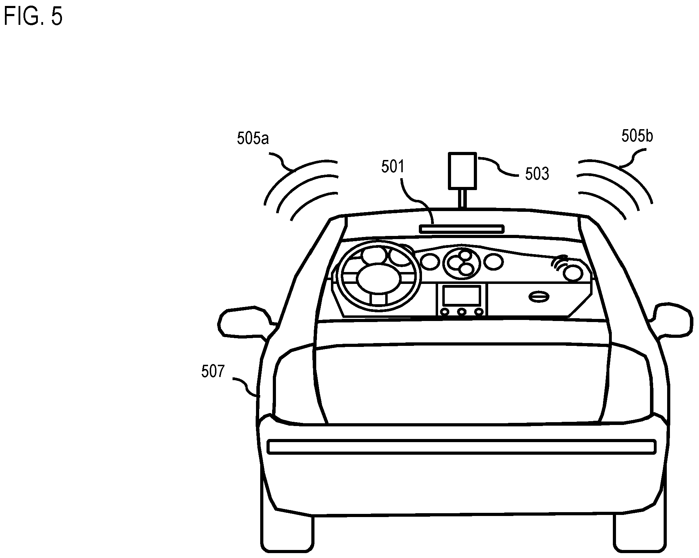

FIG. 5 is a diagram illustrating an example of collecting sensor data for determining a bicycle lane disruption index 109, according to one embodiment. As shown, the vehicle 113 (or other device such as but not limited to a UE 115, bicycle 105, or equivalent) can be equipped with sensors such as but not limited to a camera sensor 501, a LiDAR sensor 503, and infrared sensors 505a and 505b (also collectively referred to as infrared sensors 505). The vehicle 113 can use these sensors when driving on a road 101 including a bicycle lane 103. For example, the vehicle 113 can query the geographic database 125 to determine whether the current road 101 on which the vehicle 113 is driving has a bicycle lane 103. In addition or alternatively, the vehicle 113 can use its onboard sensors to detect the bicycle lane 103 (e.g., by using the feature detector 303 on captured imagery to detect lane markings indicative of a bicycle lane 103). On determining the presence of a bicycle lane 103, the vehicle 113 can begin collecting sensor data 111 (e.g., image data, LiDAR data, or equivalent) for detection of obstacles 107 that may be present in the bicycle lane 103. In one embodiment, the vehicle 113 can also receive sensor data 111 collected by other nearby vehicles and/or nearby infrastructure sensors (e.g., inground traffic loop sensors, traffic cameras, etc.) by v2v, v2x, or any other equivalent communication protocol (e.g., available over the communication network 119. The sensor data 111 from these other vehicles, devices, and/or sensors can be included in the sensor data 111 transmitted to or otherwise retrieved by the sensor data module 301.

It is contemplated that the sensor data module 301 can receive sensor data 111 that is indicative of any type of obstruction 107 in the bicycle lane 103. As used herein, an obstruction 107 refers to any object, feature, condition, etc. of the bicycle lane 103 that can affect the path, safety, progress, and/or speed of a bicycle 105 or other user of the bicycle lane 103.

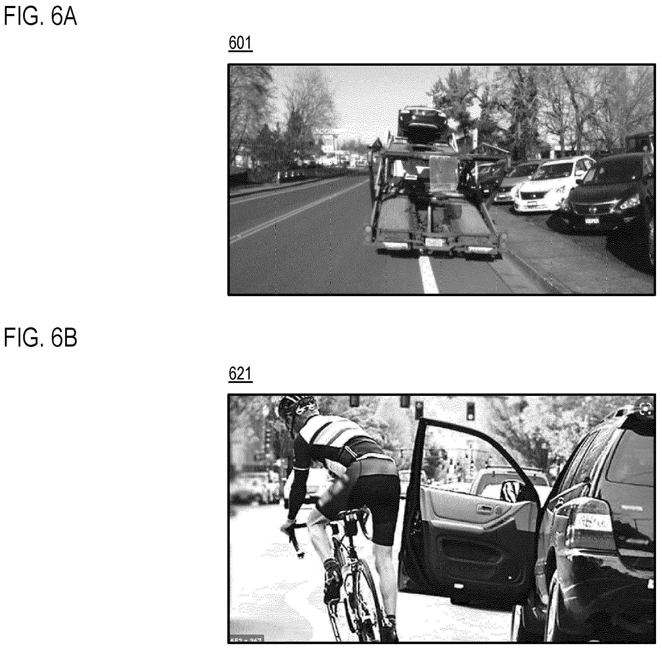

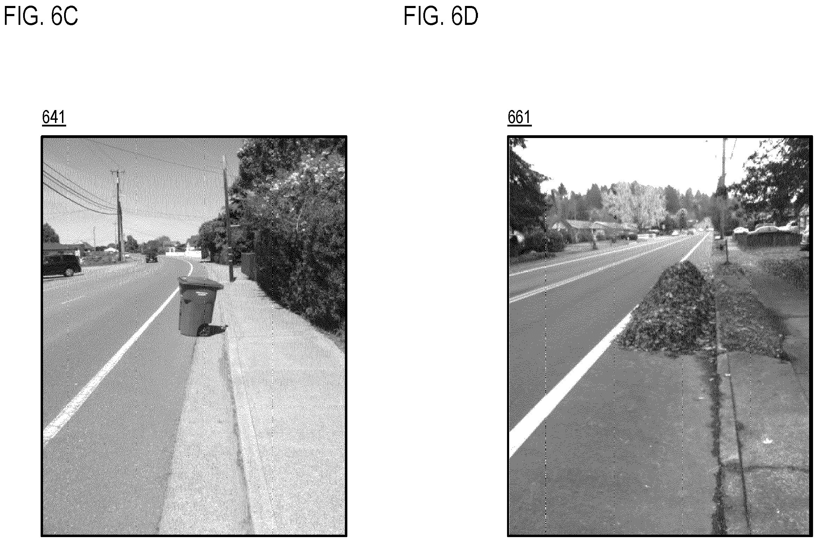

FIGs. 6A-6D are example sensor data 111 (e.g., images) depicting different bicycle lane obstruction types, according to one embodiment. FIG. 6A depicts an image 601 of a tractortrailer vehicle stopped in a bicycle lane 103. This image can be geotagged of the location of the stopped vehicle and/or the location of the camera device capturing the image, and the time (e.g., time and date) of image capture. FIG. 6B depicts an image 621 of a car opening its door into the bicycle lane 103 to potentially disrupt the progress of a bicyclist in the bicycle lane 103. The opening and closing of a car door can create very transient and quick obstruction events (e.g., on the order of seconds or minutes) that can be difficult to detect and report in a timely manner without the data being immediately out-of-date. FIG. 6C depicts an image 641 of a trashcan that has been placed out for pick up in a bicycle lane 103. This is an example of a regular event that recurs on specific days and/or times (e.g., based on the trash truck's regular pickup schedule). FIG. 6D depicts an image 661 of leaves and other debris that has been placed into the bicycle lane 103 and can potentially disrupt bicycle traffic through that segment of the bicycle lane. Such events can occur relatively frequently in certain seasons (e.g., autumn) and be relatively rare during other seasons (e.g., summer). Therefore, the temporal aspects of the bicycle lane disruption index 109 can be used to more accurately model these time-dependent disruption scenarios.

In one embodiment, the sensor data 111 includes or is otherwise provided to the sensor module 301 as a plurality of obstruction reports associated with a given bicycle lane segment or segments. These reports can include any type of obstruction including but not limited to the obstruction types described above. Some of the obstructions as illustrated can be time dependent (e.g., recurring trash pick) while others are not (e.g., miscellaneous objects dropped into the bicycle lane 103). In addition, the plurality of obstruction reports includes a plurality of real-time obstruction reports, a plurality of historical obstruction reports, or a combination thereof. The sensor data 103 can be configured to vary the time windows considered to be real-time (e.g., sensor data 111 collected with the past 4 hours, 24 hours, week, etc.) versus historical (e.g., all observations of all time, within the past year/6 months/etc.). For example, a shorter real-time or historical data collection period can enable the mapping platform 121 to more quickly respond to changes in the probability of encountering obstructions versus longer period where the overall average may be more dominant than individual spikes or changes in the probability.

In step 403, the feature detector 303 processes the geotagged sensor data to identify an observed obstruction to bicycle traffic on the bicycle lane. For example, with respect to sensor data 111 comprising images or image-like data (e.g., LiDAR scans), the processing of the geotagged sensor data 111 comprises using a machine learning feature detector to identify the observed obstruction. In other words, to report or otherwise receive reports of such obstructions 107 of the bicycle lane 103, the sensor data module 301 processes sensor data 111 to identify features or objects associated with potential obstructions of the bicycle lane 103. For example, the system 100 can use a machine learning-based feature detection to identify objects such as but not limited to: (1) a cyclist is based on machine learning-based image segmentation; (2) possible obstruction objects that can appear on a bicycle lane 103 (e.g., from the most likely object to the least likely object up to a maximum number of objects). For example, the machine learning model performing the image segmentation can be trained to classify or segment a designated number (n) of the topmost obstructions found in bicycle lanes 103. The designated number n can vary depending on a target machine learning model size, available training data, and/or the like.

In one embodiment, if the processing is occurring on the edge device, when the edge device is unsure of an obstruction detection or classification (e.g., local feature detection results have a confidence less than a threshold value), the edge device can send the image (or other sensor data 111) to the cloud (e.g., mapping platform 121) for further help on the classifying/tagging. For example, the mapping platform 121 may have more complex models and/or with more extensive training to provide for higher classification confidence of obstructions 107.

One technique that has shown significant ability to detect objects such potential bicycle lane obstructions 107 in images or image-like data is the use of convolutional neural networks (CNN). Neural networks have shown unprecedented ability to recognize objects in images, understand the semantic meaning of images, and segment images according to semantic categories (e.g., object types). An example of a CNN-based feature detector includes, but is not limited to, the You Only Look Once (YOLO) Real Time Object Detection Algorithm or equivalent. The image data (e.g., sensor data 111), for instance, include one or more images of potential obstructions at various bicycle lane segments at different times to identify observed obstructions. The CNN algorithm is able to train itself on a large database of bicycle lane obstructions 107 under different contexts (e.g., different road types, times, weather conditions, lighting conditions, etc.). In one embodiment, the feature detector 303 can input the sensor data 111 into the trained machine learning model to detect bicycle lane obstructions 107. For example, the output of the machine learning system 123 is the observed obstructions, for instance, a bounding box around each instance of the obstructions 107 in the input image(s) and optionally, a classification of the type of obstruction 107 (e.g., parked vehicle, vehicle door opening, trash can, leaves, etc.).

In one embodiment, the machine learning system 123 can also perform image segmentation to identify the obstructions 107 in an image on a pixel-by-pixel basis. For example, to perform image segmentation, the machine learning system 123 can use a Mask R-CNN or equivalent as an example implementation of image segmentation deep learning network. Mask R-CNN, for instance, enables image segmentation of input images so that individual pixels or groups of pixels of the input image can be classified into semantic categories corresponding instances of the types of obstructions 107. The instance segmentation produces an image mask for each instance of the bicycle lane obstructions 107 in a processed image as opposed to a bounding box (e.g., produced using YOLO or faster R-CNN in the various embodiments described above).

To create labeled data (e.g., training data) for the bicycle lane obstruction detection deep learning network, a large set of image chips of the same size, that contain bicycle lane obstructions, and that cover a diverse set of times and locations (e.g., cities, and neighborhood types) are manually labeled. To allow the deep learning network to learn the different contexts for the detection of bicycle obstructions, the training imagery may be selected to include a variety of contents. The contexts can include, for instance, different environmental conditions, lighting, time of day, weather, etc.

After the ground truth obstructions are labeled for each obstruction depicted in the training images (e.g., reference images to be incorporated in the training dataset), the labeled data are fed into the deep learning network to train the model to detect the bicycle lane obstructions. As described above, the machine learning system 123 can use a CNN (e.g., faster R-CNN, Mask R-CNN or equivalent) as an example implementation of the bicycle lane obstruction detection deep learning network. After the network is trained and validated using the labeled data (e.g., reference images respectively labeled with one or more ground truth obstructions under different contexts), the trained model is used to detect the bicycle lane obstructions from any new images in the collected sensor data 111.

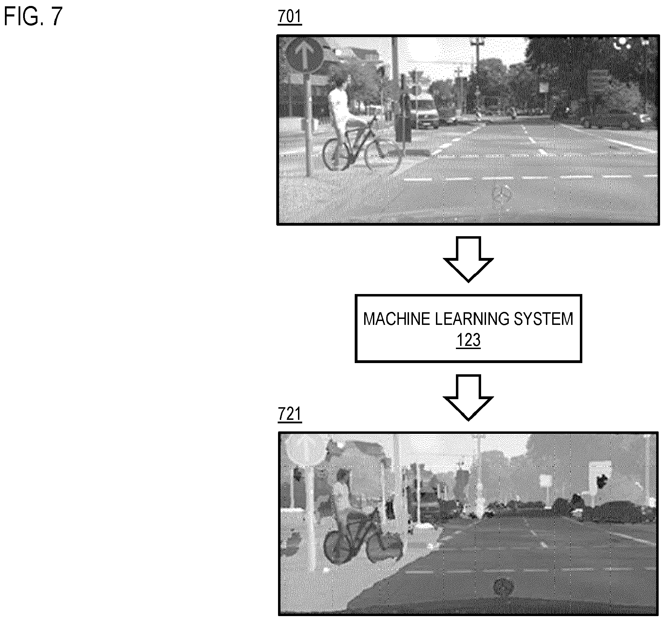

FIG. 7 is a diagram illustrating an example of machine-learning based image segmentation (e.g., via machine learning system 123) of sensor data 111 for determining a bicycle lane disruption index 109, according to one embodiment. In this example, an image 701 is captured (e.g., by a vehicle 113) of a bicyclist crossing on a bicycling lane 103. As described above, for the mapping platform 121 to be able to distinguish between a non-obstruction (e.g., the bicyclist himself/herself) that may be in a bicycle lane 103 and an actual obstruction (e.g., a parked vehicle) in the bicycle lane 103, the feature detector 303 can use a machine learning-based image segmentation algorithm of the machine learning system 123 to classify parts of the image that depict the bicyclist and parts of the image that depict semantic categories corresponding to a potential bicycle lane obstructions. For example, the image 701 is fed as input into the machine learning system 123 which is uses a trained deep learning network (e.g., a Mask R-CNN) to generate the output 721 comprising the image 701 that has been segmented to identify different semantic categories. In this example, the bicyclist is identified in one image segment, but no bicycle lane obstructions are identified. Thus, the sensor data report for the image 701 would state that for the observed bicycle lane segment at is corresponding location and image capture time, no instances of an obstruction were detected.

In one embodiment, in addition or as an alternate to the image data described in the embodiments above, the sensor data 111 can include probe data collected from the one or more devices associated with one or more bicyclists traveling on the bicycle lane. The probe data, for instance, is a collection of probes/probe points comprising a probe identifier (e.g., to uniquely identify probes from a bicycle 105 or associated UE 115), geolocation (e.g., latitude and longitude determined by a location sensor such as, but not limited to, a satellite-based location receiver, or equivalent), a timestamp, and optionally additional parameters such as, but not limited to, a speed, a brake signal to indicate a status of brake actuation, and/or the like. In this embodiment, the feature detector 303 processes the probe data to determine a bicycling behavior associated with an avoidance maneuver. The feature detector 303 can construct a path or trajectory from the individual location data points of the probe points in the probe data by, for instance, arranging all the probe points that are associated with a single probe identifier in chronological order and connecting the probe points to describe a trajectory for a single bicycle 105.

In one embodiment, this constructed trajectory can then be compared to reference trajectories known to be associated with avoiding various obstructions 107 in the bicycle lane 103. For example, a typical unobstructed path on bicycle lane generally follows the shape of the bicycle lane (e.g., the trajectory would be straight if the bicycle lane is straight). If there is an obstruction in the bicycle lane 103, the trajectory of the bicycle 105 encountering the obstruction would deviate from this expected shape (e.g., by veering to the left or right around an obstruction 107, slowing down within a short distance threshold, etc.). The observed obstruction can be identified based on the bicycling behavior. For example, the location where there is an anomaly or deviation from the expected bicycling behavior or path can be identified as the location of an obstruction in the bicycle lane 103.

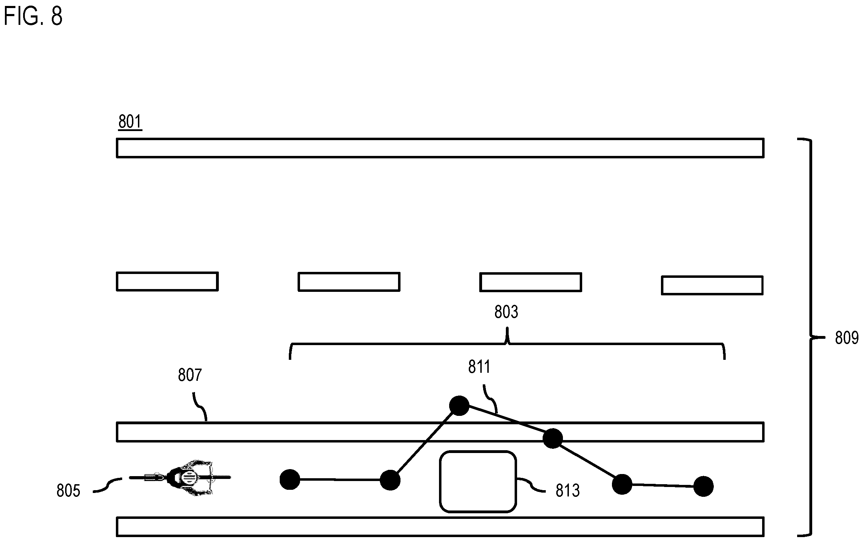

FIG. 8 is a diagram illustrating an example 801 of determining an observed obstruction from probe data 803, according to one embodiment. In the example 801 of FIG. 8, probe data 803 is collected from a bicycle 805 (e.g., via a UE 115 associated with the bicycle 805 or a built-in location sensor of the bicycle 105) traveling on a bicycle lane 807 of a road 809. The feature detector 303 reconstructs a trajectory 811 from the probe data 803 according to the embodiments described above. The feature detector 303 detects a deviation of the trajectory 811 around a potential obstacle 813 and determines that the there is an obstruction of the bicycle lane 807 at the location of the deviation to the left of the trajectory 811.

In step 405, the index module 305 map-matches the location data of observed obstructions (e.g., as detected in step 403) to a bicycle lane segment of a geographic database. Map matching, for instance, refers to translating raw geolocation coordinates (e.g., latitude, longitude) to a position on a specific segment of bicycle lane that is represented and stored in map data of the geographic database 125. In one embodiment, the specific segment of the bicycle lane 103 can be referenced by link identifier (e.g., an identifier associated with the bicycle lane 103 or the road 101 containing the bicycle lane 103) and a parametric offset. In one embodiment, the geographic database 125 uses a node/link representation of a road network, each node is an intersection, and each link connects two intersections. The parametric offset is a distance from the start node of a link in the direction of travel to the specific segment of interest. As previously described, in one embodiment, the bicycle lane disruption index 109 can be generated for each designated segment (e.g., 1-meter or any other designated interval) of a road link including a bicycle lane 103. The parametric offsets can be used to indicate the start and end of each of these designated segments. It is contemplated that the sensor module 301 can use any map matching method known in the art (e.g., a point-based map matching algorithm, trajectory-based map matching algorithm, etc.). Thus, at the end of the map-matching step, each observed obstruction will be associated with a corresponding bicycle lane segment.

In step 407, the index module 305 computes the bicycle lane disruption index for the bicycle lane segment based on the obstruction (e.g., detected from sensor data 111 according to the embodiments described herein). More specifically, the bicycle lane disruption index indicates a probability of encountering any obstruction on the bicycle lane segment. It is noted that "any obstruction" indicates obstructions in general and not a specific obstruction that has been observed. By way of example, a bicycle lane disruption index 109 means that for a particular 1-meter segment or other interval of a bicycle lane, a bicyclist or other bicycle lane user will have a probability of encountering an obstruction indicated in by the value of the bicycle lane disruption index 109 associated with the segment.

In other words, based on the obstructions detected from sensor data 111, the system computes "bicycle lane disruption index", which aggregates all the selected historical/real-time data (e.g., observed obstruction reports) into a probability of encountering an obstruction and having bicycle traffic disrupted by the obstruction. In one embodiment, the sensor data 111 and thus the resulting observed obstruction is associated with a timestamp. Then, the bicycle lane disruption index 109 can be associated with a time epoch in the geographic database 125 based on the timestamp.

In one embodiment, to calculate the bicycle lane disruption index 109, the index module bins the observed obstructions by individual segments of the bicycle lane 103. Then the bicycle lane disruption index 109 can be computed based on the observed obstructions. For example, one method for calculating the probability includes but is not limited to: (1) determining the number of observed obstructions for a given bicycle lane segment; (2) determining the total number of sensor reports evaluated for the given bicycle lane segment (e.g., including sensor data that resulted in observed obstructions and those that did not); and (3) dividing the number of observed obstructions by the total number of sensor reports to determine the value of the bicycle lane disruption index 109 for the given lane segment.

It is noted that the above calculation is provided by way of illustration as not as a limitation. It is contemplated that any statistical or mathematical process can be used to perform an equivalent calculation. For example, in one embodiment, the index module 305 can use the machine learning system 123 to determine the bicycle lane disruption index 109. The machine learning system 123, for instance, would take as an input all of the reported sensor data events linked to the obstructions of bicycle lanes 103 and process the input using a trained machine learning model (e.g., a neural network). The output of the machine learning system 123 would be the predicted bicycle lane disruption index for a given time and/or location (e.g., bicycle lane segment).

In addition to binning by bicycle lane segments, the index module 305 can further bin the data according to time epoch. For example, a day can be divided into 15-minute time epochs, and the observed obstructions and total number or sensor data reports can then be binned by both bicycle lane segment and time epoch. In this way, the index module 305 can generate bicycle lane disruption indices 109 for each given segment and each given time epoch. Table 1 below illustrates an example of generating bicycle lane disruption indices 109 by bicycle lane segment and time epoch, according to one embodiment.

**TABLE 1**

| **Link ID** | **Parametric Offset** | **Time Epoch of Day** | **Bicycle Lane Disruption Index** |
|---|---|---|---|
| 123 | 0 to 0.5 | 9:00 to 9:15 | 0.8 |
| | | 9:15 to 9:30 | 0.6 |
| | | 9:30 to 9:45 | 0.5 |
| | | ... | ... |

As shown in Table 1, the index module 305 has calculated the bicycle lane disruption indexes for each time epoch (e.g., 9:00 to 9:15, 9:15 to 9:30, 9:30 to 9:45, and so on) for a give bicycle lane segment (e.g., identified by Link ID 123 at parametric offset 0 to 0.5).

In step 409, the output module 307 stores the bicycle lane disruption index as an attribute of the bicycle lane segment in the geographic database 125. In one embodiment, the geographic database 125 uses high-definition map data to facilitate knowing precisely where such bicycle lanes 103 and the individual segments of the lanes are located to make the system 100 more efficient and reliable.

In one embodiment, location-based services and/or applications (e.g., provided by the services platform 127, services 129, and/or content providers 131) can use the bicycle lane disruption index 109 to provide various functions. For example, mapping and/or navigation applications can perform functions including but not limited to: (1) displaying such information on the map; (2) routing cyclists away from the most dangerous links which have the highest bicycle lane disruption index 109; (3) adapt guidance related information; (4) incentivizing public forces (e.g., police) to be present at the most dangerous locations (e.g., to avoid improper parking on bicycle lanes); (5) simulate areas for urban planners using such collected data; and/or the like.

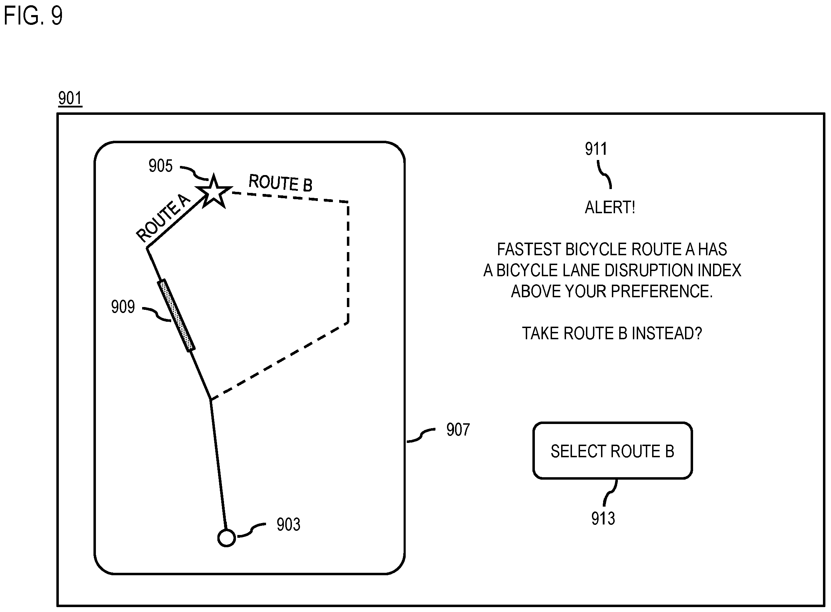

FIG. 9 is a diagram of an example user interface 901 for navigation routing based on a bicycle lane disruption index, according to one embodiment. In the example of FIG. 9, the output module 307 can generate a navigation route based on the bicycle lane disruption index. For example, a bicyclist has requested a bicycle route using bicycle lanes from a starting location 903 to a destination 905. The mapping platform 121 computes two possible routes (e.g., Route A and Route B) as displayed in user interface element 907. The mapping platform 121 queries the geographic database 125 for the bicycle lane disruption indices 109 for all bicycle lane segments in both Route A and Route B. Based on this query, the mapping platform 121 determines that Route A has one bicycle lane segment 909 (e.g., highlighted in the user interface element 907) with a bicycle disruption index 109 above a user specified threshold (e.g., 0.8 indicating a high likelihood of encountering obstructions 107). The mapping platform 121 then presents an alert 911 that informs the requesting bicyclist that the "Fastest bicycle Route A has a bicycle lane disruption index above your preference" and provides the option 913 for the bicyclist to select Route B which has no bicycle lane segment with bicycle lane segments with a bicycle disruption index 109 above the threshold, but is longer that Route A.

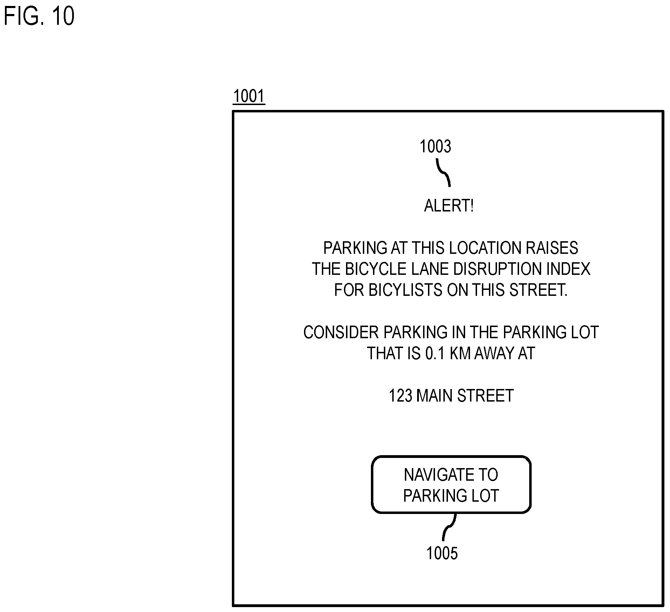

In another example use case, the mapping platform 109 can use real-time sensor data reports and observed obstructions to identify "disruptors" who may be responsible for increasing the bicycle lane disruption index 109 of a given segment by more than a threshold value. For example, the "disruptor" can be a car or delivery vehicle that is parked on the bicycle lane 103. In other words, in one embodiment, the sensor data 111 is reported in real time. The output module 307 can identify a disruptor vehicle associated with the observed obstruction according to the various embodiments described herein. The output module 307 then transmits a message to disruptor vehicle. As illustrated in the example user interface 1001 of FIG. 10, the message indicates that the disruptor vehicle is parked in the bicycle lane (e.g., alert message 1003 of user interface 1001 indicating "Parking at this location raises the bicycle lane disruption index for bicyclists on this street," and/or suggests an alternate parking location (e.g., alert message 1003 further indicating "Consider parking in the parking lot that is 0.1 km away at 123 Main Street" and providing an option 1005 to navigate to the parking lot). The recommended alternate parking lot can be queried from the points of interest in the geographic database 125. Then, the index module 203 updates the bicycle lane disruption index 109 for the affected bicycle lane segment after receiving a report that the disruptor vehicle has left the bicycle lane.

In one embodiment, as shown in the example of FIG. 2, the output module 307 uses the output of the bicycle lane disruption index 109 to provide data for generating a mapping user interface that presents a representation of the bicycle lane disruption index 109 (e.g., by showing some links or portions of links in a highlighted shade or color if their likelihood to have a or more obstructions (e.g., the bicycle lane disruption index 109) is higher than a threshold value.

In one embodiment, the output module 307 can provide data for generating a warning when approaching the bicycle lane segment based on determining that the bicycle lane disruption index is greater than a threshold value.

It is noted the example use case of the bicycle disruption index 109 described in the various embodiments above are provided by way of illustration and not as limitations.

Returning to FIG. 1, as shown, the system 100 includes the mapping platform 121 for determining a bicycle lane disruption index 109 using sensor data 111 (e.g., image data, probe data, etc.). In one embodiment, the mapping platform 121 has connectivity over the communication network 119 to services platform 127 that provides one or more services 129 that can use the bicycle lane disruption index 109 for downstream functions. By way of example, the services 129 may be third party services and include but is not limited to mapping services, navigation services, travel planning services, notification services, social networking services, content (e.g., audio, video, images, etc.) provisioning services, application services, storage services, contextual information determination services, location-based services, informationbased services (e.g., weather, news, etc.), etc. In one embodiment, the services 129 uses the output of the mapping platform 121 (e.g., bicycle lane disruption index 109, geographic database 125, etc.) to provide services such as navigation, mapping, other location-based services, etc. to the vehicles 113, UEs 115, applications 117, and/or other client devices.

In one embodiment, the mapping platform 121 may be a platform with multiple interconnected components. The mapping platform 121 may include multiple servers, intelligent networking devices, computing devices, components, and corresponding software for determining map feature identification confidence levels for a given user according to the various embodiments described herein. In addition, it is noted that the mapping platform 121 may be a separate entity of the system 100, a part of one or more services 129, a part of the services platform 127, or included within components of the vehicles 113 and/or UEs 115.

In one embodiment, content providers 131 may provide content or data (e.g., including sensor data 111 such as image data, probe data, related geographic data, etc.) to the geographic database 125, machine learning system 123, the mapping platform 121, the services platform 127, the services 129, the vehicles 113, the UEs 115, and/or the applications 117 executing on the UEs 115. The content provided may be any type of content, such as sensor data, imagery, probe data, machine learning models, permutations matrices, map embeddings, map content, textual content, audio content, video content, image content, etc. In one embodiment, the content providers 131 may provide content that may aid in determining the bicycle lane disruption index 109 according to the various embodiments described herein. In one embodiment, the content providers 131 may also store content associated with the geographic database 125, mapping platform 121, services platform 127, services 129, and/or any other component of the system 100. In another embodiment, the content providers 131 may manage access to a central repository of data, and offer a consistent, standard interface to data, such as a repository of the geographic database 125.

In one embodiment, the vehicles 113 and/or UEs 115 may execute software applications 117 to use bicycle lane disruption index 109 or other data derived therefrom according to the embodiments described herein. By way of example, the applications 117 may also be any type of application that is executable on the vehicles 113 and/or UEs 115, such as autonomous driving applications, routing applications, mapping applications, location-based service applications, navigation applications, device control applications, content provisioning services, camera/imaging application, media player applications, social networking applications, calendar applications, and the like. In one embodiment, the applications 117 may act as a client for the mapping platform 121 and perform one or more functions associated with determining the bicycle lane disruption index 109 alone or in combination with the mapping platform 121.

By way of example, the vehicles 113 and/or UEs 115 are or can include any type of embedded system, mobile terminal, fixed terminal, or portable terminal including a built-in navigation system, a personal navigation device, mobile handset, station, unit, device, multimedia computer, multimedia tablet, Internet node, communicator, desktop computer, laptop computer, notebook computer, netbook computer, tablet computer, personal communication system (PCS) device, personal digital assistants (PDAs), audio/video player, digital camera/camcorder, positioning device, fitness device, television receiver, radio broadcast receiver, electronic book device, game device, or any combination thereof, including the accessories and peripherals of these devices, or any combination thereof. It is also contemplated that the vehicles 113 and/or UEs 115 can support any type of interface to the user (such as "wearable" circuitry, etc.). In one embodiment, the vehicles 113 and/or UEs 115 may be associated with or be a component of a vehicle or any other device.

In one embodiment, the vehicles 113 and/or UEs 115 are configured with various sensors for generating or collecting sensor data 111 (e.g., image data, probe data), related geographic data, etc. In one embodiment, the sensed data represent sensor data associated with a geographic location or coordinates at which the sensor data was collected, and the polyline or polygonal representations of detected objects of interest derived therefrom to generate the digital map data of the geographic database 125. By way of example, the sensors may include a global positioning sensor for gathering location data (e.g., GPS), IMUs, a network detection sensor for detecting wireless signals or receivers for different short-range communications (e.g., Bluetooth, Wi-Fi, Li-Fi, near field communication (NFC) etc.), temporal information sensors, a camera/imaging sensor for gathering image data (e.g., the camera sensors may automatically capture road sign information, images of road obstructions, etc. for analysis), an audio recorder for gathering audio data, velocity sensors mounted on steering wheels of the vehicles, switch sensors for determining whether one or more vehicle switches are engaged, and the like.

Other examples of sensors of the vehicles 113 and/or UEs 115 may include light sensors, orientation sensors augmented with height sensors and acceleration sensor, tilt sensors to detect the degree of incline or decline (e.g., slope) along a path of travel, moisture sensors, pressure sensors, etc. In a further example embodiment, sensors about the perimeter of the vehicles 113 and/or UEs 115 may detect the relative distance of the device or vehicle from a lane or roadway, the presence of other vehicles, pedestrians, traffic lights, potholes and any other objects, or a combination thereof. In one scenario, the sensors may detect weather data, traffic information, or a combination thereof. In one embodiment, the vehicles 113 and/or UEs 115 may include GPS or other satellite-based receivers to obtain geographic coordinates from positioning satellites for determining current location and time. Further, the location can be determined by visual odometry, triangulation systems such as A-GPS, Cell of Origin, or other location extrapolation technologies.

In one embodiment, the communication network 119 of system 100 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiberoptic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, 5G New Radio networks, code division multiple access (CDMA), wideband code division multiple access (WCDMA), wireless fidelity (Wi-Fi), wireless LAN (WLAN), Bluetooth^{®}, Internet Protocol (IP) data casting, satellite, mobile ad-hoc network (MANET), and the like, or any combination thereof.

By way of example, the mapping platform 121, services platform 127, services 129, vehicles 113 and/or UEs 115, and/or content providers 131 communicate with each other and other components of the system 100 using well known, new or still developing protocols. In this context, a protocol includes a set of rules defining how the network nodes within the communication network 119 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

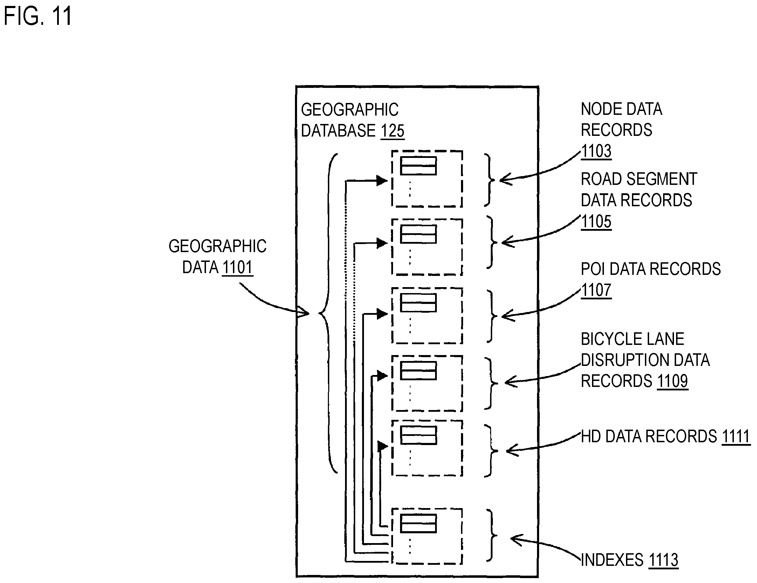

FIG. 11 is a diagram of a geographic database 125, according to one embodiment. In one embodiment, the geographic database 125 includes geographic data 1101 used for (or configured to be compiled to be used for) mapping and/or navigation-related services, such as for providing map embedding analytics according to the embodiments described herein. For example, the map data records stored herein can be used to determine the semantic relationships among the map features, attributes, categories, etc. represented in the geographic data 1101. In one embodiment, the geographic database 125 include high definition (HD) mapping data that provide centimeter-level or better accuracy of map features. For example, the geographic database 125 can be based on Light Detection and Ranging (LiDAR) or equivalent technology to collect billions of 3D points and model road surfaces and other map features down to the number lanes and their widths. In one embodiment, the HD mapping data (e.g., HD data records 1111) and/or other mapping data of the geographic database 125 capture and store details such as but not limited to road attributes and/or other features related to generating speed profile data. These details include but are not limited to road width, number of lanes, turn maneuver representations/guides, traffic lights, light timing/stats information, slope and curvature of the road, lane markings, roadside objects such as signposts, including what the signage denotes. By way of example, the HD mapping data enable highly automated vehicles to precisely localize themselves on the road.

In one embodiment, geographic features (e.g., two-dimensional or three-dimensional features) are represented using polylines and/or polygons (e.g., two-dimensional features) or polygon extrusions (e.g., three-dimensional features). In one embodiment, these polylines/polygons can also represent ground truth or reference features or objects (e.g., signs, road markings, lane lines, landmarks, etc.) used for visual odometry. For example, the polylines or polygons can correspond to the boundaries or edges of the respective geographic features. In the case of a building, a two-dimensional polygon can be used to represent a footprint of the building, and a three-dimensional polygon extrusion can be used to represent the three-dimensional surfaces of the building. Accordingly, the terms polygons and polygon extrusions as used herein can be used interchangeably.

In one embodiment, the following terminology applies to the representation of geographic features in the geographic database 125.

"Node" - A point that terminates a link.

"Line segment" - A straight line connecting two points.

"Link" (or "edge") - A contiguous, non-branching string of one or more line segments terminating in a node at each end.

"Shape point" - A point along a link between two nodes (e.g., used to alter a shape of the link without defining new nodes).

"Oriented link" - A link that has a starting node (referred to as the "reference node") and an ending node (referred to as the "non reference node").

"Simple polygon" - An interior area of an outer boundary formed by a string of oriented links that begins and ends in one node. In one embodiment, a simple polygon does not cross itself.

"Polygon" - An area bounded by an outer boundary and none or at least one interior boundary (e.g., a hole or island). In one embodiment, a polygon is constructed from one outer simple polygon and none or at least one inner simple polygon. A polygon is simple if it just consists of one simple polygon, or complex if it has at least one inner simple polygon.

In one embodiment, the geographic database 125 follows certain conventions. For example, links do not cross themselves and do not cross each other except at a node. Also, there are no duplicated shape points, nodes, or links. Two links that connect each other have a common node. In the geographic database 125, overlapping geographic features are represented by overlapping polygons. When polygons overlap, the boundary of one polygon crosses the boundary of the other polygon. In the geographic database 125, the location at which the boundary of one polygon intersects they boundary of another polygon is represented by a node. In one embodiment, a node may be used to represent other locations along the boundary of a polygon than a location at which the boundary of the polygon intersects the boundary of another polygon. In one embodiment, a shape point is not used to represent a point at which the boundary of a polygon intersects the boundary of another polygon.

As shown, the geographic database 125 includes node data records 1103, road segment or link data records 1105, POI data records 1107, bicycle lane disruption data records 1109, HD mapping data records 1111, and indexes 1113, for example. More, fewer, or different data records can be provided. In one embodiment, additional data records (not shown) can include cartographic ("carto") data records, routing data, and maneuver data. In one embodiment, the indexes 1113 may improve the speed of data retrieval operations in the geographic database 125. In one embodiment, the indexes 1113 may be used to quickly locate data without having to search every row in the geographic database 125 every time it is accessed. For example, in one embodiment, the indexes 1113 can be a spatial index of the polygon points associated with stored feature polygons. In one or more embodiments, data of a data record may be attributes of another data record.

In exemplary embodiments, the road segment data records 1105 are links or segments representing roads, streets, paths, or bicycle lanes, as can be used in the calculated route or recorded route information for determination of speed profile data. The node data records 1103 are end points (for example, representing intersections or an end of a road) corresponding to the respective links or segments of the road segment data records 1105. The road link data records 1105 and the node data records 1103 represent a road network, such as used by vehicles, cars, and/or other entities. Alternatively, the geographic database 125 can contain path segment and node data records or other data that represent pedestrian paths or areas in addition to or instead of the vehicle road record data, for example.

The road/link segments and nodes can be associated with attributes, such as geographic coordinates, street names, address ranges, speed limits, turn restrictions at intersections, and other navigation related attributes, as well as POIs, such as gasoline stations, hotels, restaurants, museums, stadiums, offices, automobile dealerships, auto repair shops, buildings, stores, parks, etc. The geographic database 125 can include data about the POIs and their respective locations in the POI data records 1107. The geographic database 125 can also include data about road attributes (e.g., traffic lights, stop signs, yield signs, roundabouts, lane count, road width, lane width, etc.), places, such as cities, towns, or other communities, and other geographic features, such as bodies of water, mountain ranges, etc. Such place or feature data can be part of the POI data records 1107 or can be associated with POIs or POI data records 1107 (such as a data point used for displaying or representing a position of a city).

In one embodiment, the geographic database 125 can also include bicycle lane disruption data records 1109 for storing the bicycle lane disruption index 109, bicycle lane segment definitions (e.g., link IDs and parametric offsets), trained machine learning models, and/or any other related data that is used or generated according to the embodiments described herein. By way of example, the bicycle lane disruption data records 1109 can be associated with one or more of the node records 1103, road segment records 1105, and/or POI data records 1107 to associate the speed profile data records 1109 with specific places, POIs, geographic areas, and/or other map features. In this way, the linearized data records 1109 can also be associated with the characteristics or metadata of the corresponding records 1103, 1105, and/or 1107.

In one embodiment, as discussed above, the HD mapping data records 1111 model road surfaces and other map features to centimeter-level or better accuracy. The HD mapping data records 1111 also include ground truth object models that provide the precise object geometry with polylines or polygonal boundaries, as well as rich attributes of the models. These rich attributes include, but are not limited to, object type, object location, lane traversal information, lane types, lane marking types, lane level speed limit information, and/or the like. In one embodiment, the HD mapping data records 1111 are divided into spatial partitions of varying sizes to provide HD mapping data to end user devices with near real-time speed without overloading the available resources of the devices (e.g., computational, memory, bandwidth, etc. resources).

In one embodiment, the HD mapping data records 1111 are created from highresolution 3D mesh or point-cloud data generated, for instance, from LiDAR-equipped vehicles. The 3D mesh or point-cloud data are processed to create 3D representations of a street or geographic environment at centimeter-level accuracy for storage in the HD mapping data records 1111.

In one embodiment, the HD mapping data records 1111 also include real-time sensor data collected from probe vehicles in the field. The real-time sensor data, for instance, integrates real-time traffic information, weather, and road conditions (e.g., potholes, road friction, road wear, etc.) with highly detailed 3D representations of street and geographic features to provide precise real-time data (e.g., including probe trajectories) also at centimeter-level accuracy. Other sensor data can include vehicle telemetry or operational data such as windshield wiper activation state, braking state, steering angle, accelerator position, and/or the like.

In one embodiment, the geographic database 125 can be maintained by the content provider 131 in association with the mapping platform 121 (e.g., a map developer or service provider). The map developer can collect geographic data to generate and enhance the geographic database 125. There can be different ways used by the map developer to collect data. These ways can include obtaining data from other sources, such as municipalities or respective geographic authorities. In addition, the map developer can employ field personnel to travel by vehicle along roads throughout the geographic region to observe features and/or record information about them, for example. Also, remote sensing, such as aerial or satellite photography, can be used.

The geographic database 125 can be a master geographic database stored in a format that facilitates updating, maintenance, and development. For example, the master geographic database or data in the master geographic database can be in an Oracle spatial format or other format (e.g., capable of accommodating multiple/different map layers), such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data is compiled (such as into a platform specification format (PSF)) to organize and/or configure the data for performing navigation-related functions and/or services, such as route calculation, route guidance, map display, speed calculation, distance and travel time functions, and other functions, by a navigation device, such as by vehicles 113 and/or UEs 115. The navigation-related functions can correspond to vehicle navigation, pedestrian navigation, or other types of navigation. The compilation to produce the end user databases can be performed by a party or entity separate from the map developer. For example, a customer of the map developer, such as a navigation device developer or other end user device developer, can perform compilation on a received geographic database in a delivery format to produce one or more compiled navigation databases.

The processes described herein for determining a bicycle lane disruption index based on sensor data 111 may be advantageously implemented via software, hardware (e.g., general processor, Digital Signal Processing (DSP) chip, an Application Specific Integrated Circuit (ASIC), Field Programmable Gate Arrays (FPGAs), etc.), firmware or a combination thereof. Such exemplary hardware for performing the described functions is detailed below.

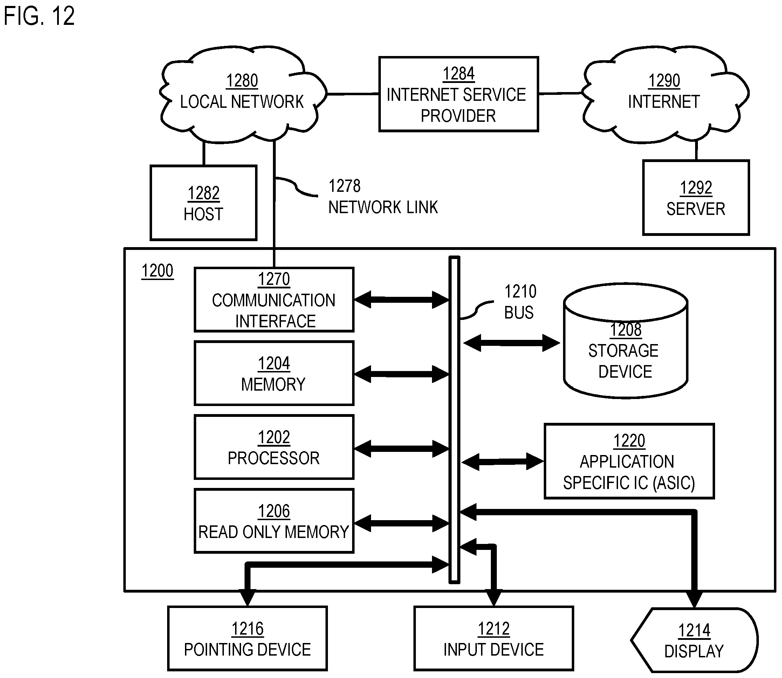

FIG. 12 illustrates a computer system 1200 upon which an embodiment of the invention may be implemented. Computer system 1200 is programmed (e.g., via computer program code or instructions) to determining a bicycle lane disruption index based on sensor data 111 as described herein and includes a communication mechanism such as a bus 1210 for passing information between other internal and external components of the computer system 1200. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 1210 includes one or more parallel conductors of information so that information is transferred quickly among devices coupled to the bus 1210. One or more processors 1202 for processing information are coupled with the bus 1210.

A processor 1202 performs a set of operations on information as specified by computer program code related to determining a bicycle lane disruption index based on sensor data 111. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 1210 and placing information on the bus 1210. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 1202, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 1200 also includes a memory 1204 coupled to bus 1210. The memory 1204, such as a random access memory (RAM) or other dynamic storage device, stores information including processor instructions for determining a bicycle lane disruption index based on sensor data 111. Dynamic memory allows information stored therein to be changed by the computer system 1200. RAM allows a unit of information stored at a location called a memory address to be stored and retrieved independently of information at neighboring addresses. The memory 1204 is also used by the processor 1202 to store temporary values during execution of processor instructions. The computer system 1200 also includes a read only memory (ROM) 1206 or other static storage device coupled to the bus 1210 for storing static information, including instructions, that is not changed by the computer system 1200. Some memory is composed of volatile storage that loses the information stored thereon when power is lost. Also coupled to bus 1210 is a non-volatile (persistent) storage device 1208, such as a magnetic disk, optical disk or flash card, for storing information, including instructions, that persists even when the computer system 1200 is turned off or otherwise loses power.

Information, including instructions for determining a bicycle lane disruption index based on sensor data 111, is provided to the bus 1210 for use by the processor from an external input device 1212, such as a keyboard containing alphanumeric keys operated by a human user, or a sensor. A sensor detects conditions in its vicinity and transforms those detections into physical expression compatible with the measurable phenomenon used to represent information in computer system 1200. Other external devices coupled to bus 1210, used primarily for interacting with humans, include a display device 1214, such as a cathode ray tube (CRT) or a liquid crystal display (LCD), or plasma screen or printer for presenting text or images, and a pointing device 1216, such as a mouse or a trackball or cursor direction keys, or motion sensor, for controlling a position of a small cursor image presented on the display 1214 and issuing commands associated with graphical elements presented on the display 1214. In some embodiments, for example, in embodiments in which the computer system 1200 performs all functions automatically without human input, one or more of external input device 1212, display device 1214 and pointing device 1216 is omitted.

In the illustrated embodiment, special purpose hardware, such as an application specific integrated circuit (ASIC) 1220, is coupled to bus 1210. The special purpose hardware is configured to perform operations not performed by processor 1202 quickly enough for special purposes. Examples of application specific ICs include graphics accelerator cards for generating images for display 1214, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 1200 also includes one or more instances of a communications interface 1270 coupled to bus 1210. Communication interface 1270 provides a one-way or twoway communication coupling to a variety of external devices that operate with their own processors, such as printers, scanners and external disks. In general, the coupling is with a network link 1278 that is connected to a local network 1280 to which a variety of external devices with their own processors are connected. For example, communication interface 1270 may be a parallel port or a serial port or a universal serial bus (USB) port on a personal computer. In some embodiments, communications interface 1270 is an integrated services digital network (ISDN) card or a digital subscriber line (DSL) card or a telephone modem that provides an information communication connection to a corresponding type of telephone line. In some embodiments, a communication interface 1270 is a cable modem that converts signals on bus 1210 into signals for a communication connection over a coaxial cable or into optical signals for a communication connection over a fiber optic cable. As another example, communications interface 1270 may be a local area network (LAN) card to provide a data communication connection to a compatible LAN, such as Ethernet. Wireless links may also be implemented. For wireless links, the communications interface 1270 sends or receives or both sends and receives electrical, acoustic or electromagnetic signals, including infrared and optical signals, that carry information streams, such as digital data. For example, in wireless handheld devices, such as mobile telephones like cell phones, the communications interface 1270 includes a radio band electromagnetic transmitter and receiver called a radio transceiver. In certain embodiments, the communications interface 1270 enables connection to the communication network 119 for determining a bicycle lane disruption index based on sensor data 111.

The term computer-readable medium is used herein to refer to any medium that participates in providing information to processor 1202, including instructions for execution. Such a medium may take many forms, including, but not limited to, non-volatile media, volatile media and transmission media. Non-volatile media include, for example, optical or magnetic disks, such as storage device 1208. Volatile media include, for example, dynamic memory 1204. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

Network link 1278 typically provides information communication using transmission media through one or more networks to other devices that use or process the information. For example, network link 1278 may provide a connection through local network 1280 to a host computer 1282 or to equipment 1284 operated by an Internet Service Provider (ISP). ISP equipment 1284 in turn provides data communication services through the public, world-wide packet-switching communication network of networks now commonly referred to as the Internet 1290.

A computer called a server host 1292 connected to the Internet hosts a process that provides a service in response to information received over the Internet. For example, server host 1292 hosts a process that provides information representing video data for presentation at display 1214. It is contemplated that the components of system can be deployed in various configurations within other computer systems, e.g., host 1282 and server 1292.

FIG. 13 illustrates a chip set 1300 upon which an embodiment of the invention may be implemented. Chip set 1300 is programmed to determine a bicycle lane disruption index based on sensor data 111 as described herein and includes, for instance, the processor and memory components described with respect to FIG. 12 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 1300 includes a communication mechanism such as a bus 1301 for passing information among the components of the chip set 1300. A processor 1303 has connectivity to the bus 1301 to execute instructions and process information stored in, for example, a memory 1305. The processor 1303 may include one or more processing cores with each core configured to perform independently. A multi-core processor enables multiprocessing within a single physical package. Examples of a multi-core processor include two, four, eight, or greater numbers of processing cores. Alternatively or in addition, the processor 1303 may include one or more microprocessors configured in tandem via the bus 1301 to enable independent execution of instructions, pipelining, and multithreading. The processor 1303 may also be accompanied with one or more specialized components to perform certain processing functions and tasks such as one or more digital signal processors (DSP) 1307, or one or more applicationspecific integrated circuits (ASIC) 1309. A DSP 1307 typically is configured to process real-world signals (e.g., sound) in real time independently of the processor 1303. Similarly, an ASIC 1309 can be configured to performed specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 1303 and accompanying components have connectivity to the memory 1305 via the bus 1301. The memory 1305 includes both dynamic memory (e.g., RAM, magnetic disk, writable optical disk, etc.) and static memory (e.g., ROM, CD-ROM, etc.) for storing executable instructions that when executed perform the inventive steps described herein to determine a bicycle lane disruption index based on sensor data 111. The memory 1305 also stores the data associated with or generated by the execution of the inventive steps.

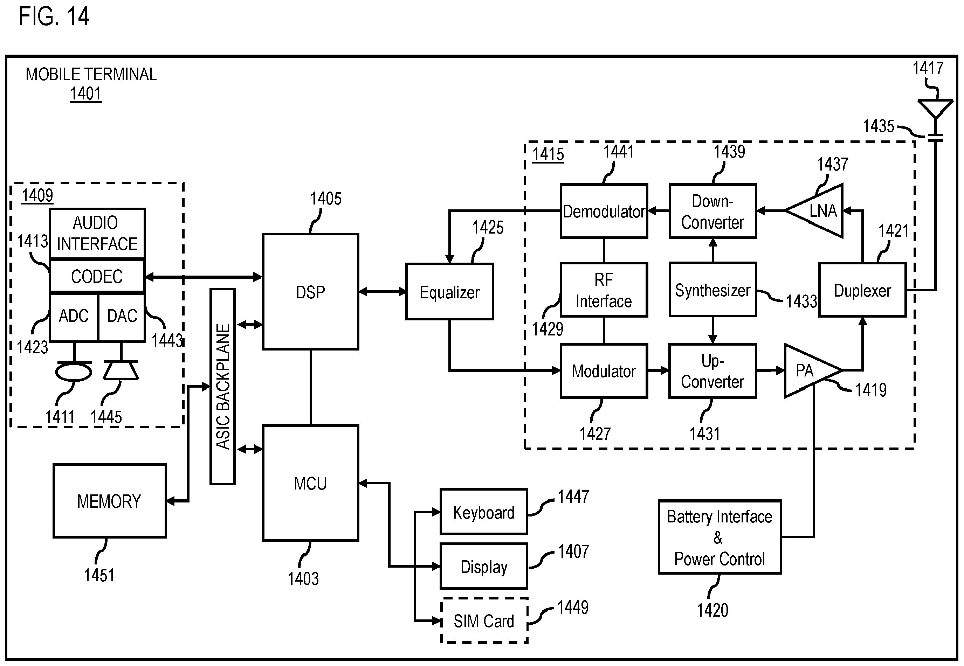

FIG. 14 is a diagram of exemplary components of a mobile terminal (e.g., handset) capable of operating in the system of FIG. 1, according to one embodiment. Generally, a radio receiver is often defined in terms of front-end and back-end characteristics. The front-end of the receiver encompasses all of the Radio Frequency (RF) circuitry whereas the back-end encompasses all of the base-band processing circuitry. Pertinent internal components of the telephone include a Main Control Unit (MCU) 1403, a Digital Signal Processor (DSP) 1405, and a receiver/transmitter unit including a microphone gain control unit and a speaker gain control unit. A main display unit 1407 provides a display to the user in support of various applications and mobile station functions that offer automatic contact matching. An audio function circuitry 1409 includes a microphone 1411 and microphone amplifier that amplifies the speech signal output from the microphone 1411. The amplified speech signal output from the microphone 1411 is fed to a coder/decoder (CODEC) 1413.

A radio section 1415 amplifies power and converts frequency in order to communicate with a base station, which is included in a mobile communication system, via antenna 1417. The power amplifier (PA) 1419 and the transmitter/modulation circuitry are operationally responsive to the MCU 1403, with an output from the PA 1419 coupled to the duplexer 1421 or circulator or antenna switch, as known in the art. The PA 1419 also couples to a battery interface and power control unit 1420.

In use, a user of mobile station 1401 speaks into the microphone 1411 and his or her voice along with any detected background noise is converted into an analog voltage. The analog voltage is then converted into a digital signal through the Analog to Digital Converter (ADC) 1423. The control unit 1403 routes the digital signal into the DSP 1405 for processing therein, such as speech encoding, channel encoding, encrypting, and interleaving. In one embodiment, the processed voice signals are encoded, by units not separately shown, using a cellular transmission protocol such as global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, 5G New Radio networks, code division multiple access (CDMA), wireless fidelity (WiFi), satellite, and the like.

The encoded signals are then routed to an equalizer 1425 for compensation of any frequency-dependent impairments that occur during transmission though the air such as phase and amplitude distortion. After equalizing the bit stream, the modulator 1427 combines the signal with a RF signal generated in the RF interface 1429. The modulator 1427 generates a sine wave by way of frequency or phase modulation. In order to prepare the signal for transmission, an upconverter 1431 combines the sine wave output from the modulator 1427 with another sine wave generated by a synthesizer 1433 to achieve the desired frequency of transmission. The signal is then sent through a PA 1419 to increase the signal to an appropriate power level. In practical systems, the PA 1419 acts as a variable gain amplifier whose gain is controlled by the DSP 1405 from information received from a network base station. The signal is then filtered within the duplexer 1421 and optionally sent to an antenna coupler 1435 to match impedances to provide maximum power transfer. Finally, the signal is transmitted via antenna 1417 to a local base station. An automatic gain control (AGC) can be supplied to control the gain of the final stages of the receiver. The signals may be forwarded from there to a remote telephone which may be another cellular telephone, other mobile phone or a land-line connected to a Public Switched Telephone Network (PSTN), or other telephony networks.

Voice signals transmitted to the mobile station 1401 are received via antenna 1417 and immediately amplified by a low noise amplifier (LNA) 1437. A down-converter 1439 lowers the carrier frequency while the demodulator 1441 strips away the RF leaving only a digital bit stream. The signal then goes through the equalizer 1425 and is processed by the DSP 1405. A Digital to Analog Converter (DAC) 1443 converts the signal and the resulting output is transmitted to the user through the speaker 1445, all under control of a Main Control Unit (MCU) 1403-which can be implemented as a Central Processing Unit (CPU) (not shown).

The MCU 1403 receives various signals including input signals from the keyboard 1447. The keyboard 1447 and/or the MCU 1403 in combination with other user input components (e.g., the microphone 1411) comprise a user interface circuitry for managing user input. The MCU 1403 runs a user interface software to facilitate user control of at least some functions of the mobile station 1401 to determine a bicycle lane disruption index based on sensor data 111. The MCU 1403 also delivers a display command and a switch command to the display 1407 and to the speech output switching controller, respectively. Further, the MCU 1403 exchanges information with the DSP 1405 and can access an optionally incorporated SIM card 1449 and a memory 1451. In addition, the MCU 1403 executes various control functions required of the station. The DSP 1405 may, depending upon the implementation, perform any of a variety of conventional digital processing functions on the voice signals. Additionally, DSP 1405 determines the background noise level of the local environment from the signals detected by microphone 1411 and sets the gain of microphone 1411 to a level selected to compensate for the natural tendency of the user of the mobile station 1401.

The CODEC 1413 includes the ADC 1423 and DAC 1443. The memory 1451 stores various data including call incoming tone data and is capable of storing other data including music data received via, e.g., the global Internet. The software module could reside in RAM memory, flash memory, registers, or any other form of writable computer-readable storage medium known in the art including non-transitory computer-readable storage medium. For example, the memory device 1451 may be, but not limited to, a single memory, CD, DVD, ROM, RAM, EEPROM, optical storage, or any other non-volatile or non-transitory storage medium capable of storing digital data.

An optionally incorporated SIM card 1449 carries, for instance, important information, such as the cellular phone number, the carrier supplying service, subscription details, and security information. The SIM card 1449 serves primarily to identify the mobile station 1401 on a radio network. The card 1449 also contains a memory for storing a personal telephone number registry, text messages, and user specific mobile station settings.

The following embodiments are also disclosed:
Embodiment 1. A method comprising:
   retrieving sensor data collected from one or more devices within proximity of a bicycle lane, wherein the sensor data is geotagged with location data;
   processing the geotagged sensor data to identify an observed obstruction to bicycle traffic on the bicycle lane;
   map-matching the location data to a bicycle lane segment of a geographic database;
   computing the bicycle lane disruption index for the bicycle lane segment based on the obstruction, wherein the bicycle lane disruption index indicates a probability of encountering any obstruction on the bicycle lane segment; and
   storing the bicycle lane disruption index as an attribute of the bicycle lane segment in the geographic database.
Embodiment 2. The method of embodiment 1, wherein the sensor data is associated with a timestamp, and wherein the bicycle lane disruption index is associated with a time epoch in the geographic database based on the timestamp.
Embodiment 3. The method of embodiment 1, wherein the processing of the geotagged sensor data comprises using a machine learning feature detector to identify the observed obstruction.
Embodiment 4. The method of embodiment 1, wherein the sensor data includes image data captured by a camera sensor, light detection and ranging (LiDAR) data captured by a LiDAR sensor, or combination thereof.
Embodiment 5. The method of embodiment 1, wherein the sensor data includes probe data collected from the one or more devices associated with one or more bicyclists traveling on the bicycle lane, the method further comprising:
   processing the probe data to determine a bicycling behavior associated with an avoidance maneuver,
   wherein the observed obstruction is identified based on the bicycling behavior.
Embodiment 6. The method of embodiment 1, wherein the sensor data includes a plurality of obstruction reports associated with the bicycle lane segment, and wherein the plurality of obstruction reports includes a plurality of real-time obstruction reports, a plurality of historical obstruction reports, or a combination thereof.
Embodiment 7. The method of embodiment 1, wherein the sensor data is reported in real time, the method further comprising:
   identifying a disruptor vehicle associated with the observed obstruction; and
   transmitting a message to disruptor vehicle,
   wherein the message indicates that the disruptor vehicle is parked in the bicycle lane, suggests an alternate parking location, or a combination thereof.
Embodiment 8. The method of embodiment 7, further comprising:
   updating the bicycle lane disruption index after receiving a report that the disruptor vehicle has left the bicycle lane.
Embodiment 9. The method of embodiment 1, further comprising:
   providing data for generating a mapping user interface that presents a representation of the bicycle lane disruption index.
Embodiment 10. The method of embodiment 1, further comprising:
   generating a navigation route based on the bicycle lane disruption index.
Embodiment 11. The method of embodiment 1, further comprising:
   providing data for generating a warning when approaching the bicycle lane segment based on determining that the bicycle lane disruption index is greater than a threshold value.
Embodiment 12. An apparatus comprising:
   at least one processor; and
   at least one memory including computer program code for one or more programs,
   the at least one memory and the computer program code configured to, with the at least one processor, cause the apparatus to perform at least the following,
      retrieve sensor data collected from one or more devices within proximity of a bicycle lane, wherein the sensor data is geotagged with location data;
      process the geotagged sensor data to identify an observed obstruction to bicycle traffic on the bicycle lane;
      map-match the location data to a bicycle lane segment of a geographic database;
      compute the bicycle lane disruption index for the bicycle lane segment based on the obstruction, wherein the bicycle lane disruption index indicates a probability of encountering any obstruction on the bicycle lane segment; and
      store the bicycle lane disruption index as an attribute of the bicycle lane segment in the geographic database.
Embodiment 13. The apparatus of embodiment 12, wherein the sensor data is associated with a timestamp, and wherein the bicycle lane disruption index is associated with a time epoch in the geographic database based on the timestamp.
Embodiment 14. The apparatus of embodiment 12, wherein the processing of the geotagged sensor data comprises using a machine learning feature detector to identify the observed obstruction.
Embodiment 15. The apparatus of embodiment 12, wherein the sensor data includes image data captured by a camera sensor, light detection and ranging (LiDAR) data captured by a LiDAR sensor, or combination thereof.
Embodiment 16. The apparatus of embodiment 12, wherein the sensor data includes probe data collected from the one or more devices associated with one or more bicyclists traveling on the bicycle lane; and wherein the apparatus is further caused to:
   process the probe data to determine a bicycling behavior associated with an avoidance maneuver,
   wherein the observed obstruction is identified based on the bicycling behavior.
Embodiment 17. A non-transitory computer-readable storage medium carrying one or more sequences of one or more instructions which, when executed by one or more processors, cause an apparatus to perform:
   retrieving sensor data collected from one or more devices within proximity of a bicycle lane, wherein the sensor data is geotagged with location data;
   processing the geotagged sensor data to identify an observed obstruction to bicycle traffic on the bicycle lane;
   map-matching the location data to a bicycle lane segment of a geographic database;
   computing the bicycle lane disruption index for the bicycle lane segment based on the obstruction, wherein the bicycle lane disruption index indicates a probability of encountering any obstruction on the bicycle lane segment; and
   storing the bicycle lane disruption index as an attribute of the bicycle lane segment in the geographic database.
Embodiment 18. The non-transitory computer-readable storage medium of embodiment 17, wherein the sensor data is associated with a timestamp, and wherein the bicycle lane disruption index is associated with a time epoch in the geographic database based on the timestamp.
Embodiment 19. The non-transitory computer-readable storage medium of embodiment 17, wherein the processing of the geotagged sensor data comprises using a machine learning feature detector to identify the observed obstruction.
Embodiment 20. The non-transitory computer-readable storage medium of embodiment 17, wherein the sensor data includes image data captured by a camera sensor, light detection and ranging (LiDAR) data captured by a LiDAR sensor, or combination thereof.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

1. A method comprising:
retrieving sensor data collected from one or more devices within proximity of a bicycle lane, wherein the sensor data is geotagged with location data;
processing the geotagged sensor data to identify an observed obstruction to bicycle traffic on the bicycle lane;
map-matching the location data to a bicycle lane segment of a geographic database;
computing the bicycle lane disruption index for the bicycle lane segment based on the obstruction, wherein the bicycle lane disruption index indicates a probability of encountering any obstruction on the bicycle lane segment; and
storing the bicycle lane disruption index as an attribute of the bicycle lane segment in the geographic database.

2. The method of claim 1, wherein the sensor data is associated with a timestamp, and wherein the bicycle lane disruption index is associated with a time epoch in the geographic database based on the timestamp.

3. The method of claim 1, wherein the processing of the geotagged sensor data comprises using a machine learning feature detector to identify the observed obstruction.

4. The method of claim 1, wherein the sensor data includes image data captured by a camera sensor, light detection and ranging (LiDAR) data captured by a LiDAR sensor, or combination thereof.

5. The method of claim 1, wherein the sensor data includes probe data collected from the one or more devices associated with one or more bicyclists traveling on the bicycle lane, the method further comprising:
processing the probe data to determine a bicycling behavior associated with an avoidance maneuver,
wherein the observed obstruction is identified based on the bicycling behavior.

6. The method of claim 1, wherein the sensor data includes a plurality of obstruction reports associated with the bicycle lane segment, and wherein the plurality of obstruction reports includes a plurality of real-time obstruction reports, a plurality of historical obstruction reports, or a combination thereof.

7. The method of claim 1, wherein the sensor data is reported in real time, the method further comprising:
identifying a disruptor vehicle associated with the observed obstruction; and
transmitting a message to disruptor vehicle,
wherein the message indicates that the disruptor vehicle is parked in the bicycle lane, suggests an alternate parking location, or a combination thereof.

8. The method of claim 7, further comprising:
updating the bicycle lane disruption index after receiving a report that the disruptor vehicle has left the bicycle lane.

9. The method of claim 1, further comprising:
providing data for generating a mapping user interface that presents a representation of the bicycle lane disruption index.

10. The method of claim 1, further comprising:
generating a navigation route based on the bicycle lane disruption index.

11. The method of claim 1, further comprising:
providing data for generating a warning when approaching the bicycle lane segment based on determining that the bicycle lane disruption index is greater than a threshold value.

12. An apparatus comprising means for performing a method according to any of claims 1 to 11.

13. A computer program product comprising instructions which, when the program is executed by a computer, cause the computer to perform a method according to any of claims 1 - 11.
